# EUROPÄISCHE PATENTSCHRIFT

(11) **EP 2 418 708 B1**
(45) Veröffentlichungstag und Bekanntmachung des Hinweises auf die Patenterteilung: **27.08.2014**
(21) Anmeldenummer: 11000978.4
(22) Anmeldetag: 07.02.2011
(51) Int. Cl.: H01M 2/10, H01M 2/12

(54) **Zuhalteelement für Batteriegehäuse**
Closure element for battery casing
Elément de fermeture pour boîtier de batterie

(30) Priorität: 11.08.2010 DE 102010034059
(43) Veröffentlichungstag der Anmeldung: 15.02.2012
(73) Patentinhaber: Carl Freudenberg KG, 69469 Weinheim (DE)
(72) Erfinder: Kritzer, Peter, Dr., 67147 Forst (DE); Nahrwold, Olaf, 67071 Ludwigshafen (DE); Clemens, Markus, 64385 Reichelsheim (DE); Unger, Hans, 69518 Abtsteinach (DE); Kramer, Thomas, 64668 Rimbach (DE); Stephan, Ingo, 64668 Rimbach (DE)

(56) Entgegenhaltungen:
- EP-A1- 0 040 311
- WO-A1-2009/012331
- DE-U1- 29 518 905
- US-A- 3 388 007
- US-A- 4 747 511
- US-B1- 7 220 137

## Beschreibung

### Technisches Gebiet

Die Erfindung betrifft **ein Batteriegehäuse nach dem Oberbegriff des Patentanspruchs 1.**

### Stand der Technik

**Die** DE 295 18 905 U1 **zeigt einen Behälter zum Aufbewahren von Blut, der ein Zuhalteelement mit einem Nippel umfasst. Die** EP 0 040 311 A1 **zeigt einen Verschlussstopfen für Akkurnulatorzellen, an welchem eine Kappe mittels einer Lasche befestigt ist. Aus der** US 3 388 007 **ist ein Zuhalteelement mit einem Deckel und einem Ring bekannt.**

Großformatige Batterie-Systeme bzw. andere elektrochemische Speicher wie beispielsweise Superkondensatoren finden in immer mehr Applikationen Verwendung. Sie finden beispielsweise in Elektrofahrzeugen oder Hybrid-Fahrzeugen, in industriellen Traktionssystemen, wie Gabelstaplern oder Robotern, in Flurförderfahrzeugen sowie in Sport- und Freizeit-Fahrzeugen Verwendung. Weitere Anwendungen finden sich in Bahnen und Flugzeugen.

Bei all diesen Anwendungen bestehen die Batterien in der Regel aus einer Vielzahl von einzelnen Zellen, welche in einem Batteriegehäuse untergebracht sind. Typische Spannungen der so verwendeten Energiespeicher betragen bis zu 1000 V. Stromstärken von mehr als 100 A sind möglich.

Typische Längen und Breiten der Batteriegehäuse sind 500 mm x 800 mm. Die Wandstärken der Batteriegehäuse betragen typischerweise 1 bis 5 mm. Die Batteriegehäuse werden aus Metallen, insbesondere Stahl oder Aluminium, oder aus Kunststoffen, insbesondere Polyamid, gefertigt.

Bei einem internen Kuzschluss kann innerhalb einer einzelnen Zelle eine Gasentwicklung stattfinden. Typische freiwerdende Volumina bei einer 40 Ah - Zelle liegen im Bereich von 100 I. Das freigesetzte Gas, welches aus Elektrolyt bzw. Elektrolyt-Abbauprodukten besteht, ist brennbar und toxisch.

Typischerweise öffnen Zellen im flexiblen Coffee-Bag-Design bei Innendrücken, die unter 1 bar liegen, und öffnen Zellen mit fester, metallischer Hülle im zylindrischen bzw. prismatischen Design bei Drücken von mehr als 10 bar.

Das freigesetzte Gas gelangt dann in das Batteriegehäuse und führt dort zu einem Druckanstieg. Dieser hängt von dem Totvolumen im Batteriegehäuse ab. Des Weiteren hängt der Druckanstieg von einer eventuellen Möglichkeit des Druckabbaus durch Undichtigkeiten, beispielsweise in der Gehäusedichtung, von einem Transfer des Gases durch Druckausgleichsöffnungen, welche zu einer Regulierung des Innendrucks der Batterie im Normalzustand angebracht sind, sowie von der Art der Zellen bzw. der Schnelligkeit einer Zellöffnung ab.

Bei der plötzlichen Freisetzung von Gasen kann das Batteriegehäuse platzen. Bei einem Totvolumen von 20 l und einem Freisetzen von 100 I Gas würde das Batteriegehäuse unter einem Überdruck von 5 bar stehen. Das brennbare und toxische Gas kann mit Personen in Kontakt kommen, kann nämlich in den Innenraum eines Fahrzeuges gelangen. Das brennbare und toxische Gas kann in Kontakt mit stromführenden Teilen kommen, was zu einer Entzündung oder Explosion führen kann.

In der Regel sind die freigesetzten Gase nicht besonders heiss, so dass Werkstoffe aus NBR oder EPDM den Gasen Stand haften können. Hinzu kommt, dass bei einer Freisetzung der Gase die Dichtung keine Rolle mehr spielt, da ein Ventil öffnen muss. Oftmals existieren für Ventile und deren Komponenten Forderungen nach einer Temperaturbeständigkeit von mehr als 500 °C und nach einer Resistenz gegenüber Flusssäure.

Diese Temperaturbedingungen können bei brennenden Batterien auftreten, Die normalerweise freigesetzten relativ geringen Flusssäurekonzentrationen können bei Verwendung von polyolefinischen Elastomeren wie EPDM toleriert werden. Um äußerst kritische Zustände des Gesamtsystems bei der genannten Öffnung einer Zelle zu vermeiden, muss daher jede großformatige Batterie, insbesondere eine Lithium-Batterie, eine Vorrichtung zum sicheren Abbau von Überdrücken besitzen.

Ein Ventil zum Abbau von Überdrücken darf bei normalen Betriebszuständen nicht öffnen. Beispielsweise dürfen Druckunterschiede durch Temperaturkompensation oder Druckunterschiede bei Berg- und Talfahrten nicht zu einer Öffnung des Ventils führen. Diese typischen Druckschwankungen liegen im Bereich von max. +/- 0,2 bar. Ein Ventil muss überdies auf jeden Fall verhindern, dass Wasser von außen eindringen kann.

Vor allem bei automobilen Anwendungen werden daher an das Ventil erhöhte Anforderungen gestellt. Es muss eine Watfähigkeit gegeben sein. In Waschanlagen oder bei auftretendem Spritzwasser unter hohem Druck muss eine Dichtheit gegeben sein. Hier wird in der Regel die Schutzart IP 67 ("Wasserschutz" nach DIN EN 60529 bzw. DIN 40050 Teil 9) gefordert.

Des Weiteren muss verhindert werden, dass bei Öffnung des Ventils Teile herumfliegen. Im Falle eines Öffnens sollte ein gemäßigter Abbau des Überdrucks stattfinden. Das heisst, dass eine Öffnung eines Ventils nicht schlagartig erfolgen soll, der Überdruck aber dennoch zügig abgebaut wird. Das Gesamtsystem soll robust sein. Es soll garantiert auch nach 10 Jahren unter "Auto-Bedingungen" noch funktionieren.

Das Ventil sollte daher keine Alterung zeigen sowie bei Verschmutzung und Korrosion nicht festbacken.Typische freie Querschnittsflächen des Ventils hängen von der Kapazität der Zellen und der Größe der Batterie ab. Typische Querschnittsflächen sind 5 cm² bis 30 cm².

Um die genannten Probleme zu lösen, enthalten die Batteriegehäuse von großformatigen Lithium-Batterien in der Regel eine Einheit zum Abbauen von Überdruck. Hierzu gibt es mehrere Ausführungen.

Denkbar ist ein Ventil, welches in Verbindung mit einem innenliegenden Drucksensor gesteuert wird. Hierbei ist nachteilig, dass diese Ausführung technisch aufwendig und teuer ist, Strom verbraucht, anfällig gegen Korrosion und technisch zu komplex ist. Es kann auch das Prinzip einer Berstscheibe eingesetzt werden. Hierzu werden beispielsweise thermoplastische Folien auf Öffnungen des Batteriegehäuses aufgebracht. Hierbei ist nachteilig, dass es zu einer Materialversprödung kommen kann, die in einem Versagen resultiert. Es ist kein gemäßigter Druckabbau möglich, da eine Berstscheibe platzt. Eine Folie ist anfällig gegenüber äußerer Durchstoßung und/ oder Verletzung. Des Weiteren kann ein Federventil eingesetzt werden, Hierbei ist nachteilig, dass herumfliegende Teile nicht ausgeschlossen werden können, dass eine Anfälligkeit der Feder gegen Korrosion besteht und dass die Öffnungsquerschnittsfläche beschränkt ist.

### Darstellung der Erfindung

Der Erfindung liegt daher die Aufgabe zu Grunde, ein Batteriegehäuse derart auszugestalten und weiterzubilden, dass dieses im Normalbetrieb eine zuverlässige Dichtheit aufweist, bei Störfällen Gasen aber erlaubt, problemlos und gerichtet zu entweichen, ohne dass Teile des Batteriegehäuses oder eines Ventils unkontrolliert weggeschleudert werden.

Die vorliegende Erfindung löst die zuvor genannte Aufgabe durch die Merkmale des Patentanspruchs 1.

Erfindungsgemäß umfasst ein Zuhalteelement zum Verschliessen einer Öffnung eines Batteriegehäuses einen Deckel, wobei der Deckel eine Anschlussnut aufweist, in weiche eine Wand eines Batteriegehäuses einfügbar oder einschnappbar ist, wobei vom Deckel ein zerstörungsfrei deformierbares Verbindungsstück abragt und wobei das Verbindungsstück mit einem Nippel versehen ist. Erfindungsgemäß wird durch diese Lehre eine einfache, stromlose und alterungsbeständige Ausführung eines Zuhalteelements angegeben.

Konkret ist erkannt worden, dass ein Deckel, welcher an einer Seite durch einen Nippel fest mit dem Batteriegehäuse verbunden ist, verliersicher an dieses angebunden ist. Der Deckel ist über ein Verbindungsstück mit dem Nippel verbunden. Vorteilhaft werden hierdurch die Haltedrücke über den Lebenszeitraum konstant gehalten, so dass keine Schwächung durch Alterung auftritt.

Ein Herausspringen des Deckels ist ein Anzeichen für eine vom Deckel entfaltete Notfunktion. Überraschend gelingt es mit dem erfindungsgemäßen Ansatz, ein alterungsbeständiges, verlässliches Zuhalteelement zu schaffen. Dieses zeigt einen Schaden oder eine Aktivität eines Ventils an. Der Deckel ist an dem Batteriegehäuse fixiert und kann nicht durch die Luft geschleudert werden, wenn Gas aus dem Batteriegehäuse austritt. Insoweit ist ein Batteriegehäuse angegeben, welches im Normalbetrieb eine zuverlässige Dichtheit aufweist, bei Störfällen Gasen aber erlaubt, problemlos und gerichtet zu entweichen, ohne dass Teile des Batteriegehäuses unkontrolliert weggeschleudert werden.

**Die Anschlussnut bildet auf der der Innenwand des Batteriegehäuses zugewandten Seite unterschiedliche Überstände aus. Hier liegt eine exzentrische Ausrichtung der Anschlussnut in Bezug auf die Dichtung des Deckels vor. Dies führt dazu, dass der Deckel bei Überdruck im Inneren des Batteriegehäuses zunächst an einer Seite öffnet und so ein gemäßigter Druckabbau erfolgt.**

**Ein Gehäuse, nämlich ein Batteriegehäuse mit einer ersten Öffnung, nimmt in der ersten Öffnung einen Deckel eines Zuhalteelements der hier beschriebenen Art auf, wobei in einer zweiten Öffnung der Nippel aufgenommen ist. Hierdurch ist sicher gestellt, dass der Deckel nicht durch den Raum geschleudert wird, wenn er aus der Wand des Gehäuses gesprengt wird.**
Folglich ist die eingangs genannte Aufgabe gelöst.

Der Deckel könnte eine umlaufende Dichtung zur Anlage an der Außenwand des Batteriegehäuses aufweisen. Die Dichtung kann eine Abdichtung gegen gelegentlich von außen anstehendes Wasser bieten. Das Wasser kann ggf. Netzmittel enthalten, wie sie in Reinigungsmedien einer Waschanlage vorkommen. Die Dichtung soll eine Abdichtung gegen Ölspritzer bieten. Des Weiteren soll die Dichtung einen Toleranzausgleich des Materials des Deckels gegenüber dem Batteriegehäuse bieten. Gewünscht ist auch eine Ausgleichsfunktion, welche unterschiedlichen Wärmeausdehnungskoeffizienten Rechnung trägt. Die Dichtung könnte aus einem Eiastomervollmaterial oder einem 2K-Bauteil bestehen. Die Dichtung könnte als aufvulkanisiertes Elastomer ausgestaltet sein. Die Dichtung könnte als im Raupenauftragsverfahren aufgetragenes Elastomer ausgestaltet sein. Die Dichtung könnte als extrudiertes, thermoplastisches Elastomer (TPE) oder als thermoplastisches Polyurethan (TPU) ausgestaltet sein. Die Dichtung könnte als aufgeklebtes Elastomer oder TPE ausgestaltet sein. Die Dichtung könnte als geschlossenporiger Schaum ausgestaltet sein.

Vor diesem Hintergrund könnte ein Überstand, welcher dem Nippel näher liegt, größer sein als ein Überstand, welcher vom Nippel entfernt ist. Der Deckel kann dann derart aus der Wand gedrückt werden, dass zuletzt der Teil der Anschlussnut aus der Wand gedrückt wird, der dem Nippel am nächsten liegt.

Eine Fläche des Deckels könnte mit einer Parallelebene zur Innenwand des Batteriegehäuses einen Winkel einschließen. Aufgrund der Schräge weist der Deckel in einem Bereich eine höhere Steifigkeit auf als in einem anderen Bereich. Daher wird die Verformung des Deckels in einem Bereich stärker ausgeprägt als in einem anderen.

Vor diesem Hintergrund könnte eine Fläche des Deckels mit einer Parallelebene zur Innenwand des Batteriegehäuses einen Winkel X einschließen, der im Bereich 2° < X < 30° liegt. Dieser Winkelbereich hat sich als besonders vorteilhaft erwiesen, um einen Deckel aus einem Elastomer günstig zu verformen.

Der Nippel könnte mit einer Montagehilfe versehen sein, die auf ihn abnehmbar oder abreissbar aufgesetzt ist. Hierdurch kann der Nippel problemlos in eine Öffnung eingeführt werden.

Zwischen der Wand, in der die erste Öffnung ausgebildet ist, und einem Nutgrund des Deckels könnte ein Spalt ausgebildet sein. Der Spalt verhindert ein Anbacken des Elastomers an dem Batteriegehäuse. Zudem tritt nach längerer Zelt ein gewolltes Absetzen der Dichtung ein, so dass der Spalt in seiner Breite beibehalten wird oder sich sogar geringfügig vergrößert Dadurch ist sicher gestellt, dass eine verlässliche Öffnung auch nach langer Lebenszeit des Zuhalteelements erfolgen kann.

Das Zuhalteelement der hier beschriebenen Art könnte zum Verschließen eines Gehäuses eines elektrochemischen Speichers, insbesondere eines Batteriegehäuses, verwendet werden.

Des Weiteren ist denkbar, das Zuhalteelement in einem chemischen Reaktor zu verwenden, in welchem bei einem Störfall ein Druckanstieg stattfinden kann.

Der Deckel bzw. das Zuhalteelement könnte aus elastomerem Material oder aus einem 2K-Bauteil gefertigt sein. Der Deckel könnte im Gehäuse verspannt sein. Der Deckel könnte so verspannt sein, dass auch nach Jahren der Benutzung keine Verklebung mit dem Gehäuse auftritt (Stephan-Kavernen). Der Deckel könnte so ausgeführt sein, dass das Öffnen an einer Seite leichter erfolgt als an einer anderen Seite. Hierdurch wird ein "Soll-Öffen-Mechanismus" geschaffen. Der Deckel könnte am Gehäuse derart verklammert sein, dass unterschiedliche Gehäuse-Wandstärken toleriert werden können.

Der Nippel könnte aus einem Elastomer gefertigt sein. Der Nippel könnte so eingebracht sein, dass er bei wegfliegendem Deckel nicht mit herausgerissen werden kann. Hierzu könnte er von innen eingebracht sein. Die Einbaurichtungen des Deckels und Nippels könnten gleichgerichtet oder gegengerichtet sein. Ein Teil des Nippels könnte entfernbar sein. Hierdurch sind eine Reduktion des Bauraums und eine komfortable Montage ermöglicht.

Das Verbindungsstück könnte aus einem Elastomer, aus einem Gewebe, welches an den Enden einvulkanisiert ist, oder aus einer Schnur bestehen

Der Deckel, der Nippel und das Verbindungsstück könnten einstückig ausgestaltet sein.

Es könnte am Zuhalteelement ein Rohr oder ein Schlauch vorgesehen sein, durch welches / welchen das Gas sicher abtransportiert werden kann. Der Schlauch könnte aufgesteckt oder verschraubt sein. Das Zuhalteelement könnte nicht direkt am Batteriegehäuse, sondern erst in den Schlauch integriert werden. Es könnte ein Filterelement, insbesondere ein Vlies oder eine Festkörper-Schüttung, vorgesehen sein, welches austretendes Gas bzw. Bestandteile bindet oder absorbiert. Als Absorptionsmedien könnten Aktivkohle oder Trockenmittel Verwendung finden.

Das Material, aus dem das dichtende Zuhalteelement gefertigt ist, könnte elektromagnetisch abschirmend ausgeführt sein. Hierdurch ist sichergestellt, dass keine Ströme aus dem / in das Batteriegehäuse gelangen können. Die Abschirmung kann beispielsweise durch Zumischung elektrisch leitfähiger Füllstoffe in ein Elastomer erfolgen. Alternativ ist denkbar, zumindest eine Oberfläche des Zuhalteelements und des Nippels elektrisch leitend zu beschichten. Dies könnte mittels Metall-Bedampfung oder einer galvanischen Abscheidung erfolgen. Aufgrund der relativ geringen elastischen Bewegung / geringen Dehnraten ist nicht davon auszugehen, dass diese Beschichtung im Betrieb abplatzt.

Die dem Metall zugewandten Oberflächen der Anschlussnuten, insbesondere die Oberflächen im Bereich der Öffnung, könnten beschichtet sein. Dies verhindert ein Anbacken des Elastomers an den metallischen Oberflächen und garantiert dadurch ein verlässliches Öffnen des Deckels auch nach langer Lebenszeit.

Das flexible Verbindungsstück könnte nachträglich an eines oder beide Bauteile, nämlich Deckel oder Nippel, angebracht werden. Hierdurch ist ein modularer Aufbau möglich.

Ein Teil des Nippels könnte nachträglich abgetrennt werden. Dies könnte durch Sollbruchstellen oder durch Anschneiden erfolgen. Dies ist vorteilhaft, um Bauraum zu reduzieren.

Über dem Zuhalteelement könnte eine Abführungs-Elnrichtung, beispielsweise ein Rohr, ein Schlauch oder ähnliches angebracht sein, welches die durch Öffnen des Deckels freigesetzten Gase sicher abtransportieren kann.

Der Deckel sollte bei einem Innenüberdruck von 1 bar bei einer Fläche von 10 cm² ansprechen. Er darf allerdings bei einem Überdruck im Inneren von 0,3 bar bei einer Fläche von 10 cm² nicht ansprechen. Der Deckel darf nicht ansprechen bzw. zerstört werden bei einem Außendruck der höher ist als der Innendruck.

Der Deckel, das Verbindungsstück, die Dichtung oder der Nippel könnten aus Elastomeren gefertigt sein. Als Elastomere könnten NBR (Nitril-Butadien-Kautschuk), HNBR (hydrierter Nitrit-Butadien-Kautschuk). EPDM (Ethylen-Propylen-Dien-Kautschuk), FKM (Flour-Kautschuk), ACM (Acrylat-Kautschuk) oder VMQ (Silkon-Kautschuk) verwendet werden.

### Kurzbeschreibung der Zeichnung

In der Zeichnung zeigt
- Fig. 1: schematisch ein Batteriegehäuse, welches einen Innenraum umschließt und eine temporäre erste Öffnung aufweist, wobei in der ersten Öffnung ein dichtendes Zuhalteelement angeordnet ist,
- Fig. 2: eine perspektivische Ansicht und eine Schnittansicht des dichtenden Zuhalteelements, welches aus einem Deckel mit einer umlaufenden Dichtung besteht, wobei der Deckel mittels eines flexiblen Verbindungsstücks mit einem Nippel verbunden ist,
- Fig. 3: zeigt eine Schnittansicht des dichtenden Zuhalteelements, bestehend aus einem Deckel mit einer umlaufenden Dichtung, welcher mittels eines flexiblen Verbindungsstücks mit einem Nippel verbunden ist und im Gesamten in die Wand des Batteriegehäuses eingebracht ist, und
- Fig. 4: zeigt eine Schnittansicht eines weiteren Ausführungsbeispiels des dichtenden Zuhalteelements, wobei eine Fläche des Deckels mit der Wand eines Batteriegehäuses einen stumpfen Winkel einschließt.

### Ausführung der Erfindung

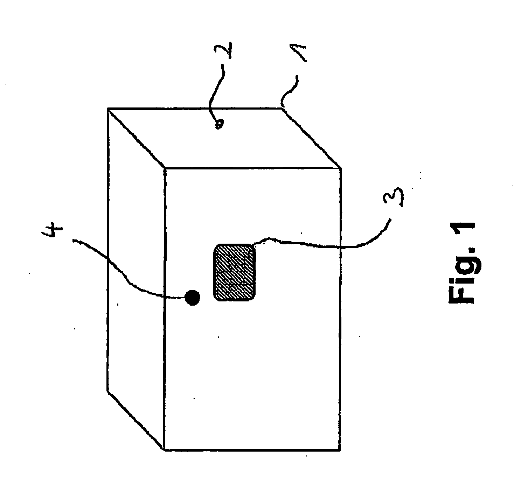

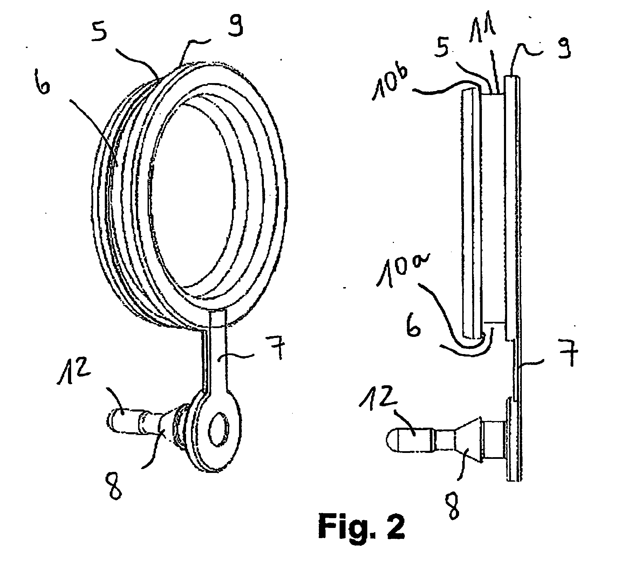

Fig. 1 zeigt schematisch ein Batteriegehäuse 1, welches einen Innenraum 2 umschließt und eine temporäre erste Öffnung 3 aufweist. Die erste Öffnung 3 wird durch das in den Fig. 2 bis 4 beschriebene dichtende Zuhalteelement verschlossen. Dieses weist ein flexibles Verbindungsstück auf, welches mit einem Nippel verbunden ist. Der Nippel ist in einer temporären zweiten Öffnung 4 aufgenommen.

Fig. 2 zeigt sowohl in einer linken als auch in einer rechten Ansicht das Zuhalteelement zum Verschliessen einer ersten Öffnung 3 eines Batteriegehäuses 1, umfassend einen Deckel 5, wobei der Deckel 5 eine Anschlussnut 6 aufweist, in welche eine Wand eines Batteriegehäuses 1 schnappbar ist, wobei vom Deckel 5 ein zerstörungsfrei deformierbares Verbindungsstück 7 abragt und wobei das Verbindungsstück 7 mit einem Nippel 8 versehen ist.

Der Deckel 5 weist eine umlaufende Dichtung 9 zur Anlage an der Außenwand des Batteriegehäuses 1 aufweist. Die Anschlussnut 6 bildet auf der der Innenwand des Batteriegehäuses 1 zugewandten Seite unterschiedliche Überstände 10a, 10b aus. Ein Überstand 10a, welcher dem Nippel 8 näher liegt, ist größer als ein Überstand 10b, welcher vom Nippel 8 entfernt ist. Dabei ragt der Überstand 10a in radialer Richtung weiter vom Nutgrund 11 ab als der Überstand 10b. Die umlaufende Anschlussnut 6 ist relativ zur umlaufenden Dichtung 9 exzentrisch angeordnet.

Der Nippel 8 ist mit einer Montagehilfe 12 versehen, die auf ihn abnehmbar aufgesetzt ist. Die Montagehilfe 12 ist als Hütchen ausgebildet.

Fig. 2 zeigt in einer linken perspektivischen Ansicht und in einer rechten Schnittansicht das dichtende Zuhalteelement, bestehend aus einem Deckel 5 mit einer umlaufenden Dichtung 9, welcher mittels eines flexiblen Verbindungsstücks 7 mit dem Nippel 8 verbunden ist. Der Nippel 8 enthält dabei eine herausstehende und ggf. entfernbare Montagehilfe 12.

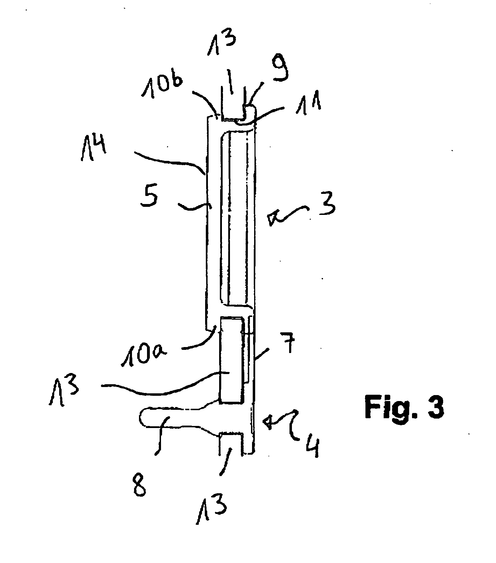

Fig. 3 zeigt in einer Schnittansicht das dichtende Zuhalteelement, bestehend aus einem Deckel 5 mit einer umlaufenden Dichtung 9, welcher mittels eines flexiblen Verbindungsstücks 7 mit dem Nippel 8 verbunden ist und im Gesamten in die Wand 13 eines Batteriegehäuses 1 eingebracht ist. In dieser Ausführung ist die Fläche 14 des Deckels 5 planparallel zur Wand 13. Die Anschlussnut 6 hat in diesem Fall unterschiedliche Überstände 10a, 10b, so dass der Überstand 10a der dem Nippel 8 näher liegenden Seite größer ist als der Überstand 10b der dem Nippel 8 abgewandten Seite. Hier liegt eine exzentrische Ausführung vor. Dies führt dazu, dass bei innerem Überdruck der Deckel 5 zunächst an der dem Nippel 8 abgewandten Seite öffnet und so ein gemäßigter Druckabbau erfolgt.

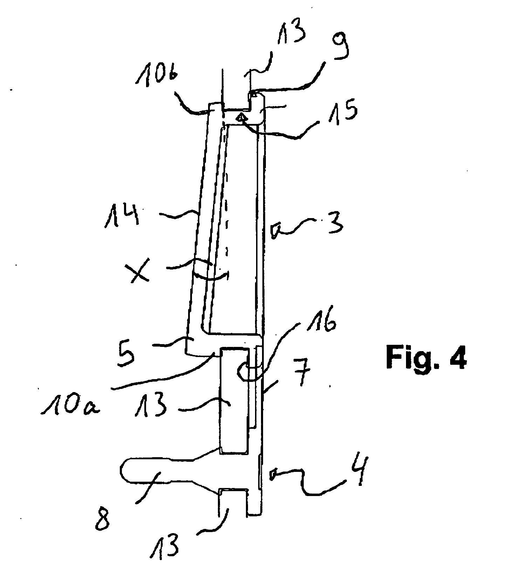

Fig. 4 zeigt ein Zuhalteelement, bei welchem eine Fläche 14 des Deckels 5 mit einer Parallelebene zur Wand 13 des Batteriegehäuses 1 einen Winkel einschließt. Die Fläche 14 des Deckels 5 schließt mit einer Parallelebene zur Innenwand des Batteriegehäuses einen Winkel X ein, der im Bereich 2° < X < 30° liegt.

Die Fig. 3 und 4 zeigen ein Batteriegehäuse 1 mit einer ersten Öffnung 3, wobei in der ersten Öffnung 3 ein Deckel 5 eines Zuhalteelements aufgenommen ist und wobei in einer zweiten Öffnung 4 der Nippel 8 aufgenommen ist.

Fig. 4 zeigt, dass zwischen der Wand 13, in der die Öffnungen 3, 4 ausgebildet sind, und einem Nutgrund 11 des Deckels 5 ein Spalt 15 ausgebildet ist.

Fig. 4 zeigt eine Schnittansicht des dichtenden Zuhalteelements, bestehend aus einem Deckel 5 mit einer umlaufenden Dichtung 9, welcher mittels eines flexiblen Verbindungsstücks 7 mit dem Nippel 8 verbunden ist und im Gesamten in die Wand 13 eines Batteriegehäuses 1 eingebracht ist. In dieser Ausführung schließt die Fläche 14 des Deckels 5 mit der Wand 13 des Batteriegehäuses 1 einen Winkel X ein, der 2° < X < 30° beträgt. Die beiden Anschlussnuten 6 haben in diesem Falle in etwa gleiche Überstände 10a, 10b. Dies führt dazu, dass bei innerem Überdruck der Deckel 5 zunächst ungleichmäßig belastet wird und dadurch zunächst an der dem Nippel 8 abgewandten Seite öffnet und so ein gemäßigter Druckabbau erfolgt.

Fig. 4 zeigt in einer Schnittansicht ein dichtendes Zuhalteelement Die beiden Anschlussnuten 6 werden von der Dichtung 9 begrenzt, welche eine der Wand 13 zugewandte Lippe 16 aufweisen. Die Anschlussnuten 6 bilden mit dem Batteriegehäuse 1 einen Spalt 15. Diese Ausführung hat folgende Vorteile: Die Dichtung 9 verhindert das Eindringen von Wasser und kompensiert Temperaturschwankungen über weite Bereiche. Der Spalt 15 verhindert ein Anbacken des Elastomers an das Batteriegehäuse 1. Zudem tritt nach längerer Zeit ein gewolltes Absetzen der Dichtung 9 ein, so dass der Spalt 15 in seiner Breite beibehalten wird oder sich sogar geringfügig vergrößert. Dadurch ist sicher gestellt, dass ein verlässliches Öffnnen der ersten Öffnung 3 auch nach langer Lebenszeit des Zuhalteelements erfolgen kann.

In den Fig. 2 bis 4 weist die Wand 13 des Batteriegehäuses 1 eine Innenwand und eine Außenwand auf. An der Innenwand liegen die Überstände 10a, 10b an, an der Außenwand liegt die Dichtung 9 an.

## Patentansprüche

1. **Batteriegehäuse mit einer ersten Öffnung (3), wobei in der ersten Öffnung (3) ein Deckel (5) eines** Zuhalteelements zum Verschliessen **der** Öffnung (3) **des** Batteriegehäuses (1) **aufgenommen ist, wobei das Zuhalteelement den** Deckel (5) **umfasst,** wobei der Deckel (5) eine Anschlussnut (6) aufweist, in welche eine Wand (13) **des** Batteriegehäuses (1) einfügbar ist, und wobei vom Deckel (5) ein zerstörungsfrei deformierbares Verbindungsstück (7) abragt,
**dadurch gekennzeichnet, dass**
das Verbindungsstück (7) mit einem Nippel (8) versehen ist, **wobei in einer zweiten Öffnung (4) der Nippel (8) aufgenommen ist und wobei die Anschlussnut (6) auf der der Innenwand des Batteriegehäuses (1) zugewandten Seite unterschiedliche Überstände (10a, 10b) ausbildet.**

2. **Batteriegehäuse** nach Anspruch 1, **dadurch gekennzeichnet, dass** der Deckel (5) eine umlaufende Dichtung (9) zur Anlage an der Außenwand des Batteriegehäuses (1) aufweist.

3. **Batteriegehäuse** nach Anspruch **1 oder 2, dadurch gekennzeichnet, dass** ein Überstand (10a), welcher dem Nippel (8) näher liegt, größer ist als ein Überstand (10b), welcher vom Nippel (8) entfernt ist.

4. **Batteriegehäuse** nach einem der Ansprüche **1 bis 3, dadurch gekennzeichnet, dass** der Nippel (8) mit einer Montagehilfe (12) versehen ist, die auf ihn abnehmbar aufgesetzt ist.

5. **Batteriegehäuse** nach **einem der Ansprüche 1 bis 4, dadurch gekennzeichnet, dass** zwischen der Wand (13), in der die erste Öffnung (3) ausgebildet ist und einem Nutgrund (11) des Deckels (5) ein Spalt (15) ausgebildet ist.

## Claims

1. Battery housing having a first opening (3), wherein a cover (5) of a closure element for closing the opening (3) of the battery housing (1) is received in the first opening (3), wherein the closure element comprises the cover (5), wherein the cover (5) has a connection groove (6) into which a wall (13) of the battery housing (1) can be inserted, and wherein a connection piece (7) which can be deformed without destruction projects from the cover (5), **characterized in that** the connection piece (7) is provided with a nipple (8), wherein the nipple (8) is received in a second opening (4), and wherein the connection groove (6) forms different projections (10a, 10b) on the side facing the inner wall of the battery housing (1).

2. Battery housing according to Claim 1, **characterized in that** the cover (5) has a circumferential seal (9) for bearing on the outer wall of the battery housing (1).

3. Battery housing according to Claim 1 or 2, **characterized in that** a projection (10a) which is closer to the nipple (8) is larger than a projection (10b) which is at a distance from the nipple (8).

4. Battery housing according to one of Claims 1 to 3, **characterized in that** the nipple (8) is provided with a mounting aid (12) which is placed removably thereon.

5. Battery housing according to one of Claims 1 to 4, **characterized in that** a gap (15) is formed between the wall (13) in which the first opening (3) is formed and a groove bottom (11) of the cover (5).

## Revendications

1. Boîtier de batterie comprenant une première ouverture (3), un couvercle (5) d'un élément de fermeture étant reçu dans la première ouverture (3) pour fermer l'ouverture (3) du boîtier de batterie (1), l'élément de fermeture comportant le couvercle (5), le couvercle (5) comprenant une rainure de connexion (6) dans laquelle peut être insérée une paroi (13) du boîtier de batterie (1), et une pièce de liaison (7) qui peut être déformée de manière non destructive faisant saillie à partir du couvercle (5),
**caractérisé en ce que**
la pièce de liaison (7) est pourvue d'un mamelon (8), le mamelon (8) étant reçu dans une deuxième ouverture (4) et la rainure de connexion (6) formant, sur le côté tourné vers la paroi intérieure du boîtier de batterie (1), différentes saillies (10a, 10b).

2. Boîtier de batterie selon la revendication 1, **caractérisé en ce que** le couvercle (5) comprend un joint d'étanchéité périphérique (9) destiné à s'appuyer contre la paroi extérieure du boîtier de batterie (1).

3. Boîtier de batterie selon la revendication 1 ou 2, **caractérisé en ce qu'**une saillie (10a) qui est située plus près du mamelon (8) est plus grande qu'une saillie (10b) qui est éloignée du mamelon (8).

4. Boîtier de batterie selon l'une quelconque des revendications 1 à 3, **caractérisé en ce que** le mamelon (8) est pourvu d'un auxiliaire de montage (12) qui est placé sur celui-ci de manière amovible.

5. Boîtier de batterie selon l'une quelconque des revendications 1 à 4, **caractérisé en ce qu'**un interstice (15) est réalisé entre la paroi (13) dans laquelle la première ouverture (3) est réalisée et un fond de rainure (11) du couvercle (5).
